(19) Europäisches Patentamt / European Patent Office / Office européen des brevets

(11) **EP 3 608 803 A1**

(12) **EUROPEAN PATENT APPLICATION**
published in accordance with Art. 153(4) EPC

(43) Date of publication:
**12.02.2020 Bulletin 2020/07**

(51) Int Cl.:
***G06F 17/50*** (2006.01)

(21) Application number: **17903494.7**

(22) Date of filing: **24.11.2017**

(86) International application number:
**PCT/CN2017/112885**

(87) International publication number:
**WO 2018/176871 (04.10.2018 Gazette 2018/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **01.04.2017 CN 201710214500**

(71) Applicants:
• **Beijing Aeronautical Science & Technology Research Institute,Commercial Aircraft Corporation of China**
  **Beijing 102211 (CN)**
• **Commercial Aircraft Corporation Of China, Ltd.**
  **Shanghai 200126 (CN)**

(72) Inventors:
• **QIU, Ju**
  **Beijing 102211 (CN)**
• **HU, Zhendong**
  **Beijing 102211 (CN)**
• **XIE, Wenxuan**
  **Beijing 102211 (CN)**
• **HU, Jingze**
  **Beijing 102211 (CN)**
• **JI, Shengcheng**
  **Beijing 102211 (CN)**
• **LI, Ming**
  **Beijing 102211 (CN)**

(74) Representative: **Gille Hrabal**
  **Brucknerstrasse 20**
  **40593 Düsseldorf (DE)**

(54) **STRAIN SENSOR OPTIMIZATION ARRANGEMENT METHOD BASED ON VIRTUAL TEST**

(57) The invention relates to the technical field of dynamic tests, and provides a virtual test-based strain sensor optimized layout method. The method comprises a step of representing the existence of a strain sensor with a Delta function; a step of moving the point of application of an applied impact load randomly, and conducting transient response analysis; and a step of applying a genetic optimization algorithm aiming at optimization objectives of minimized total number of the sensors and maximized 2-norm of total strain in response to the impact, to obtain a preferred layout scheme of the strain sensors. The beneficial effects of the method provided in the present invention include: a Delta function is used to represent the existence of a strain sensor, which is practical; based on a genetic algorithm, the point of application of an impact load can be moved randomly between skin nodes, so that the optimized layout result of the strain sensors has high universality; the optimization objectives are simple and easy to define and describe; and at least one half of sensors can be saved with the layout scheme when compared with the traditional sensor layout scheme.

Fig.1

Printed by Jouve, 75001 PARIS (FR)

## Description

### Field of the Invention

The present invention relates to the technical field of dynamic tests, particularly to a virtual test-based strain sensor optimized layout method.

### Background of the Invention

In vibration and impact experiments, the positions of sensor test points must be determined first. Usually the number of test points arranged in an experiment is much smaller than the degrees of freedom of the structure. How to arrange a limited number of sensors to realize optimal acquisition of structural state change information from noisy signals and obtain more information on structural characteristics and structural responses as far as possible is one of the key techniques for effective implementing an optimized sensor layout in complex engineering structure tests.

For example, the accuracy of identification parameters will be affected if the sensors are not arranged properly; in addition, in consideration of economic efficiency, the number of sensors used in the test should be reduced as far as possible. Therefore, it is of great practical value to determine an optimal layout of the sensors.

In order to realize an optimal layout of the sensors, reasonable criteria for layout optimization, which can reflect the test requirements, shall be determined first. At present, commonly used layout optimization criteria include: Modal Kinetic Energy (MKE) Method; Effective Independence (EI) Method; Guyan Model Reduction Method, Singular Value Decomposition Method, and optimization based on Generalized Genetic Algorithm (GGA).

The general process of sensor layout optimization comprises encoding sensor arrangement positions and selecting control parameters, objective functions and evaluation indexes; utilizing the effects of the type of objective functions of the genetic algorithm and the number of monitored vibration modes on the layout optimization scheme, and using feasible layout optimization schemes, such as Gramian matrix determinant value, root mean square of non-diagonal elements of MAC matrix, maximum value of non-diagonal elements of MAC matrix, Gramian matrix elements, and modal strain energy, so as to find out an optimized layout scheme and preferred positions of the sensors finally.

The general process of sensor layout optimization is complex to implement (a large quantity of matrix operations are required), and mainly takes account of factors related with modal vibrations.

### Content of the Invention

The object of the present invention is to overcome the drawbacks in the prior art and obtain a number of preferred sensor layout (position selection) schemes through transient response analysis.

The present invention provides a virtual test-based strain sensor optimized layout method, which comprises:

A step of representing the existence of a strain sensor with a Delta function;

A step of moving the point of application of an applied impact load randomly and conducting transient response analysis; and

A step of applying a genetic optimization algorithm aiming at optimization objectives of minimized total number of the sensors and maximized 2-norm of total strain in response to the impact, to obtain a preferred layout scheme of the strain sensors.

Furthermore, the method specifically comprises the following steps:

Step 1: dividing a wing skin into a plurality of units, setting up the characteristics of material and units, and converting wing spars, stringers and ribs into spar units;

Step 2: fixedly supporting the wing butt, applying 1 unit impact load to the nodes of wing units for 0-0.002s, conducting transient response analysis based on modal superposition, requesting to output 81 results at time increment $\Delta t=0.0001s$, and extracting maximum strain $S_i$ of each wing unit in response to the impact at certain time from the result, where i=1-n, and n is the number of units;

Step 3: applying a genetic optimization algorithm aiming at optimization objectives of minimized total number of the sensors and maximized 2-norm of total strain in response to the impact, to obtain a preferred layout scheme of the strain sensors.

Furthermore, in the step 1, the wing skin is divided into 120 units.

Furthermore, the step 3 is specifically implemented with the following method:

Step 3.1: defining that a sensor is provided for each wing unit; thus, there are num sensors altogether;

$$\text{num} = \sum_{i=0}^{n} X_i \qquad (1)$$

Step 3.2: defining a Delta function to represent the existence of a sensor, i.e.,

$$X_i = \begin{cases} 1, & \text{use} \\ 0, & \text{no use} \end{cases} \qquad i=1,2,\ldots,n \qquad (2)$$

Step 3.3: defining a 2-norm of total strain (strain energy or acceleration, etc.) measured by the sensors:

$$||S||_2 = \left(\sum_{i=1}^{n} |X_i S_i|^2\right)^{\frac{1}{2}} \qquad (3)$$

Where, n is the number of the units;

step 3.4: defining design variables: unit impact load is moved at the nodes of the wing skin units, serial number of the point of application of the unit impact load is used as a design variable, which is an integer variable with increment step equal to 1;

Step 3.5: defining optimization objectives: minimized total number num of the sensors and maximized 2-norm $\|S\|_2$ of total strain are two optimization objectives;

Step 3.6: optimizing the total number and positions of the strain sensors with a genetic algorithm.

Furthermore, the optimization objectives are: minimized total number of the sensors and maximized 2-norm of total strain energy in response to the impact; or minimized total number of the sensors or maximized 2-norm of total acceleration in response to the impact.

Furthermore, the genetic optimization algorithm is implemented with Isight software.

The present invention attains the following beneficial effects:

1) A Delta function is used to represent the existence of a strain sensor, which is practical;

2) Based on a genetic algorithm, the point of application of an impact load can be moved randomly between skin nodes, so that the optimized layout result of the strain sensors has high universality;

3) The optimization objectives are simple and easy to define and describe;

4) More factors are considered for multiple optimization objectives, which is more consistent with the actual situation; the result of multi-objective optimization provides a variety of options;

5) Sensors in quantity of at least one half of the number of units can be saved.

**Brief Description of Drawings**

Fig. 1 shows a finite element model of the wing skin.

Fig. 2 shows a curve of unit impact load vs. time.

Fig. 3 shows a Pareto front of total number of sensors num and total strain S in response to impact.

**Detailed Description of the Embodiments**

Hereunder the embodiments of the present invention will be detailed with reference to the accompanying drawings. It should be noted that the technical features or combinations of technical features described in the following embodiments shall not be deemed as separate ones; instead, they may be combined with each other to attain a better technical effect. In the accompanying drawings mentioned in the following embodiments, identical features or components are represented by the same symbols, and those symbols may be applied in different embodiments.

An embodiment of the present invention puts forward a virtual test-based strain sensor optimized layout method, in which a Delta function is used to represent the existence of a strain sensor, the point of application of an applied impact load is moved randomly, transient response analysis is carried out, and a genetic optimization algorithm is used, aiming at optimization objectives of minimized total number of sensors and maximized 2-norm of total strain (strain energy and acceleration) in response to the impact, to obtain a preferred layout (position selection) scheme. Specifically, the method comprises the following steps:

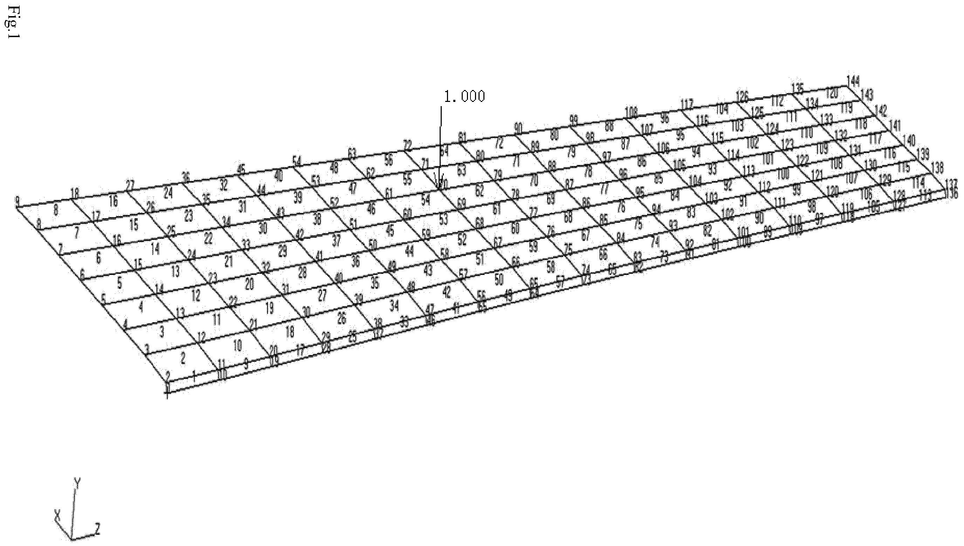

Step 1: dividing a wing skin into a plurality of units (120 plate units, i.e., 120 areas, as shown in Fig. 1), setting up the characteristics of material and units, and converting relevant structures, such as wing spar, stringers and ribs, etc., into spar units; there are 1-9 nodes at the wing butt, and the rest nodes are designated serial numbers as 10-144;

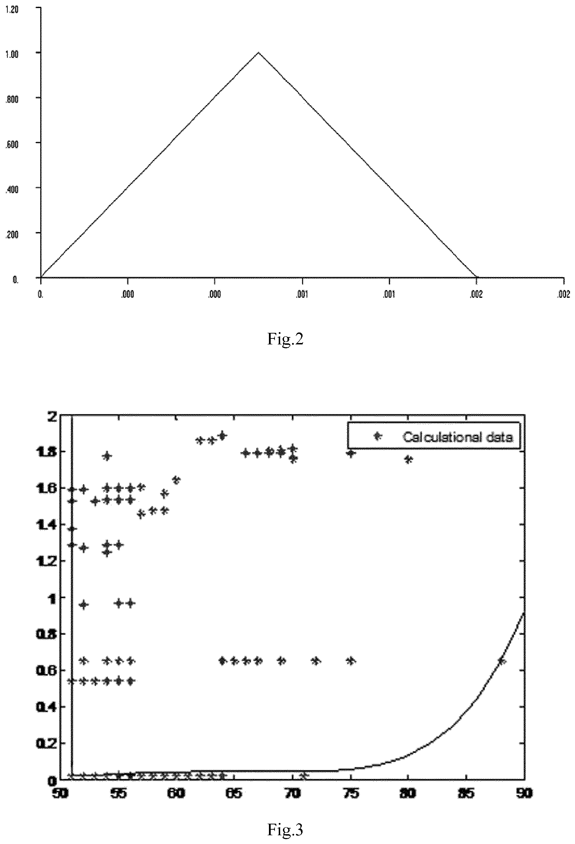

Step 2: fixedly supporting the wing butt, applying unit impact load to a position of the wing structure (the time of action is 0-0.002s, the variation of the unit impact load with time is shown in Fig. 2, where, the X-axis represents time, and the Y-axis represents impact load), conducting transient response analysis based on modal superposition, requesting to output 81 results at time increment $\Delta t=0.0001s$ (i.e., at 0s, 0.0001s, 0.0002s, 0.0003s, ..., 0.008s), and extracting maximum strain $S_i$ (i=1, 120) of each wing unit in response to the impact at certain time from the result;

Step 3: setting up a program for multi-objective optimized distribution of the sensors with a genetic algorithm in Isight software (a variety of genetic algorithms are available for use; though one genetic algorithm is used in this embodiment, the present invention is not limited to that);

A) Defining that a sensor $X_i$ is provided for each wing unit; thus, there are num sensors altogether;

$$num = \sum_{i=0}^{120} X_i \qquad (1)$$

B) Defining a Delta function to represent the existence of a sensor, i.e.,

$$X_i = \begin{cases} 1, & use \\ 0, & no\ use \end{cases} \qquad i=1,2,\ldots,120 \qquad (2)$$

C) Defining a 2-norm of total strain (strain energy or acceleration, etc.) measured by the sensors:

$$||S||_2 = \left(\sum_{i=1}^{n} |X_i S_i|^2\right)^{\frac{1}{2}} \qquad (3)$$

where, n=120.

D) Defining optimization objectives
Optimizing the number and the positions of the strain sensors with a genetic algorithm, aiming at two optimization objectives, i.e., minimized total number of sensors and maximized 2-norm $\|S\|_2$ of total strain.

E) Defining design variable
Defining the movement of the unit impact load at the nodes of the wing skin units, using the ID of the point of application of the unit impact load as a design variable $\in$ [10, 144], and defining the variable as an integer variable with increment step equal to 1. It should be noted that the variable $X_i \in$ [0, 1] that represents the existence of a strain sensor is defined as an integer variable, with increment step equal to 1.

F) Presenting optimization result:
Plotting a Pareto front of total number of sensors and total strain in response to impact, as shown in Fig. 3.

Several optimal sensor layouts can be found out in Fig. 5, and are listed in Table 1.

Table 1. Number and Positions of Strain Sensors in Strain Sensor Layouts

| Selected layout | Number of design cycles | Node ID of point of application of impact load | Total number of strain sensors | IDs of units with strain sensors on the skin (units with $X_i$=1) | 2-norm $\|S\|_2$ of total strain ($\times$10-7) |
|---|---|---|---|---|---|
| 1 | 783 | 2 | 57 | 1, 5, 9, 45, 56, 63...... | 1.5 |
| 2 | 4836 | 10 | 54 | 1, 5, 7, 35, 40, 53...... | 1.4 |
| 3 | 6493 | 4 | 54 | 5, 9, 12, 45, 56, 95...... | 1.71 |
| 4 | 6629 | 7 | 52 | 13, 19, 28, 33, 74...... | 1.67 |
| 5 | 6918 | 4 | 51 | 11, 51, 93, 95, 101, 112...... | 1.6 |
| 6 | 7333 | 5 | 51 | 23, 26, 29, 55, 56, 66 | 1.87 |
| 7 | 7527 | 9 | 51 | 21, 24, 36, 39, 41, 55...... | 1.07 |
| 8 | 7538 | 3 | 54 | 31, 33, 34, 42, 43, 49...... | 1.57 |
| 9 | 7552 | 6 | 51 | 3, 5, 8, 18, 26, 27...... | 1.32 |

In the actual application of the present invention, a specific number of units may be used according to the specific circumstance. The arrangement of 120 units in this embodiment is only an example.
The present invention attains the following beneficial effects:

1) Conventional criteria for sensor layout optimization use Gramian matrix determinant value, mean square root of non-diagonal elements of MAC matrix, maximum value of non-diagonal elements of MAC matrix, Gramian matrix elements, and modal strain energy, etc.; in contrast, in the present invention, a Delta function is used to represent the existence of a strain sensor, which is practical;

2) Based on a genetic algorithm, the point of application of an impact load can be moved randomly between skin nodes, so that the optimized layout result of the strain sensors has high universality;

3) The optimization objectives are simple and easy to define and describe;

4) More factors are considered for multiple optimization objectives, which is more consistent with the actual situation; the result of multi-objective optimization provides a variety of options;

5) At least one half of sensors can be saved when compared with a conventional sensor layout.

While some embodiments of the present invention have been described above, those skilled in the art should appreciate that various modifications can be made to those embodiments without departing from the spirit of the present invention. Those embodiments are only exemplary, and shall not be deemed as constituting any limitation to the scope of protection of the present invention.

**Claims**

**1.** A virtual test-based strain sensor optimized layout method, wherein, comprising:

a step of representing the existence of a strain sensor with a Delta function;
a step of moving the point of application of an applied impact load randomly and conducting transient response analysis; and
a step of applying a genetic optimization algorithm aiming at optimization objectives of minimized total number of the sensors and maximized 2-norm of total strain in response to the impact, to obtain a preferred layout scheme of the strain sensors.

2. The virtual test-based strain sensor optimized layout method according to claim 1, wherein, specifically comprising the following steps:

step 1: dividing a wing skin into a plurality of units, setting up the characteristics of material and units, and converting wing spars, stringers and ribs into spar units;

step 2: fixedly supporting the wing butt, applying 1 unit impact load to the nodes of wing units for 0-0.002s, conducting transient response analysis based on modal superposition, requesting to output 81 results at time increment $\Delta t$=0.0001s, and extracting maximum strain $S_i$ of each wing unit in response to the impact at certain time from the result, where i=1-n, and n is the number of units;

step 3: applying a genetic optimization algorithm aiming at optimization objectives of minimized total number of the sensors and maximized 2-norm of total strain in response to the impact, to obtain a preferred layout scheme of the strain sensors.

3. The virtual test-based strain sensor optimized layout method according to claim 2, wherein, in the step 1, the wing skin is divided into 120 units.

4. The virtual test-based strain sensor optimized layout method according to claim 2, wherein, the step 3 is specifically implemented with the following method:

step 3.1: defining that a sensor is provided for each wing unit; thus, there are num sensors altogether;

$$num = \sum_{i=0}^{n} X_i \qquad (1)$$

step 3.2: defining a Delta function to represent the existence of a sensor, i.e.,

$$X_i = \begin{cases} 1, & \text{use} \\ 0, & \text{no use} \end{cases} \qquad i=1,2,\ldots,n \qquad (2)$$

step 3.3: defining a 2-norm of total strain (strain energy or acceleration, etc.) measured by the sensors:

$$||S||_2 = (\sum_{i=1}^{n} |X_i S_i|^2)^{\frac{1}{2}} \qquad (3)$$

where, n is the number of the units;

step 3.4: defining design variables: unit impact load is moved at the nodes of the wing skin units, serial number of the point of application of the unit impact load is used as a design variable, which is an integer variable with increment step equal to 1;

step 3.5: defining optimization objectives: minimized total number num of the sensors and maximized 2-norm $||S||_2$ of total strain are two optimization objectives;

step 3.6: optimizing the total number and positions of the strain sensors with a genetic algorithm.

5. The virtual test-based strain sensor optimized layout method according to any of claims 1-4, wherein, the optimization objectives are: minimized total number of the sensors and maximized 2-norm of total strain energy in response to the impact; or minimized total number of the sensors or maximized 2-norm of total acceleration in response to the impact.

6. The virtual test-based strain sensor optimized layout method according to any of claims 1-4, wherein, the genetic optimization algorithm is implemented with Isight software.

Fig.1

Fig.2

Fig.3

# INTERNATIONAL SEARCH REPORT

| International application No. |
| --- |
| PCT/CN2017/112885 |

## A. CLASSIFICATION OF SUBJECT MATTER

G06F 17/50 (2006.01) i

According to International Patent Classification (IPC) or to both national classification and IPC

## B. FIELDS SEARCHED

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 邱菊, 胡震东, 谢汶轩, 扈静泽, 汲生成, 李明, 传感器, 布局, 布置, 优化, 数量, 最小化, 应变, 应力, 最大化, 范数, 载荷, 随机, 瞬态, 响应, 遗传, strain, transducer?, sensor, optimized, arrangement, impact, load, optimization, response, optimization, genetic

## C. DOCUMENTS CONSIDERED TO BE RELEVANT

| Category* | Citation of document, with indication, where appropriate, of the relevant passages | Relevant to claim No. |
| --- | --- | --- |
| PX | CN 107330133 A (COMAC BEIJING AERONAUTICAL SCIENCE & TECHNOLOGY RESEARCH INSTITUTE (BASTRI) et al.), 07 November 2017 (07.11.2017), claims 1-6 | 1-6 |
| Y | CN 104992002 A (XIDIAN UNIVERSITY), 21 October 2015 (21.10.2015), description, paragraphs [0014]-[0029] and [0047]-[0060], and figures 1-3 | 1, 5, 6 |
| Y | CN 104133960 A (NORTHEASTERN UNIVERSITY), 05 November 2014 (05.11.2014), description, paragraphs [0120]-[0175] | 1, 5, 6 |
| A | CN 101458259 A (NORTHWESTERN POLYTECHNICAL UNIVERSITY), 17 June 2009 (17.06.2009), entire document | 1-6 |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 12 February 2018 | 26 February 2018 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>WANG, Jing<br><br>Telephone No. (86-10) 53961317 |

Form PCT/ISA/210 (second sheet) (July 2009)

## INTERNATIONAL SEARCH REPORT
### Information on patent family members

International application No.

PCT/CN2017/112885

| Patent Documents referred in the Report | Publication Date | Patent Family | Publication Date |
|---|---|---|---|
| CN 107330133 A | 07 November 2017 | None | |
| CN 104992002 A | 21 October 2015 | None | |
| CN 104133960 A | 05 November 2014 | None | |
| CN 101458259 A | 17 June 2009 | None | |

Form PCT/ISA/210 (patent family annex) (July 2009)